# EUROPÄISCHE PATENTSCHRIFT

(11) **EP 0 967 817 B1**
(45) Veröffentlichungstag und Bekanntmachung des Hinweises auf die Patenterteilung: **25.08.2004**
(21) Anmeldenummer: 99112355.5
(22) Anmeldetag: 23.06.1999
(51) Int. Cl.: H04Q 7/34

(54) **Verbindung eines lokalen Wartungsterminals mit einer Basisstation eines mobilen Telekommunikationsnetzes**
Connection of a local maintenance terminal with a base station of a mobile telecommunications network
Connexion d'un terminal de maintenance avec une station de base d'un réseau mobile de télécommmunications

(30) Priorität: 25.06.1998 DE 19828398
(43) Veröffentlichungstag der Anmeldung: 29.12.1999
(73) Patentinhaber: SIEMENS AKTIENGESELLSCHAFT, 80333 München (DE)
(72) Erfinder: Attia, Amr, 81737 München (DE); Stark, Thomas, 81476 München (DE)

(56) Entgegenhaltungen:
- WO-A-95/21510
- CA-A- 2 221 855
- DE-U- 29 714 382
- KING B ET AL: "SIMPLE DOWN LOAD INTERFACE FOR GSM EQUIPMENT" MOTOROLA TECHNICAL DEVELOPMENTS,US,MOTOROLA INC. SCHAUMBURG, ILLINOIS, Bd. 28, August 1996 (1996-08), Seiten 167-169, XP000638462
- JOSELYN L: "EXPANDED PC ELIMINATES TEST TEDIUM" NEW ELECTRONICS, GB, INTERNATIONAL THOMSON PUBLISHING, LONDON, Bd. 23, Nr. 3, März 1990 (1990-03), Seiten 33-34, XP000201130 ISSN: 0047-9624

## Beschreibung

Die Erfindung betrifft die Verbindung eines lokalen Wartungsterminals mit einer Basisstation eines mobilen Telekommunikationsnetzes, ein lokales Wartungsterminal für eine Basisstation und eine Basisstation.

Basisstationen, im folgenden mit BTS abgekürzt, sind oft auf Masten oder anderen schwer zugänglichen Orten montiert. Um zu Wartungszwecken Zugriff auf die Basisstation zu haben, muß die Basisstation mit einem Kabel mit dem lokalen Wartungsterminal, das beispielsweise durch ein Notebook realisiert ist, verbunden werden. Da das Verbindungskabel nicht als Dauerinstallation an der Basisstation angebracht verbleiben kann, muß an der Basisstation ein entsprechender Stecker vorhanden sein, so daß es Schwierigkeiten bezüglich der Kapselung des Steckers gegenüber Witterungseinflüssen gibt. Ferner muß das Wartungspersonal real an die Basisstation gelangen, indem sie beispielsweise den Montagemast der Basisstation erklettert, um ein Verbindungskabel in den Stecker der Basisstation zu stecken. Ferner wird zur Datenübertragung anschließend üblicherweise eine RS232-Schnittstelle verwendet, wodurch die Kabellänge zur problemlosen Datenübertragung auf ca. 20 Meter begrenzt ist.

WO 95/21510 beschreibt eine Basisstation, die eine Betriebsund Wartungseinheit (operations and maintenace unit) aufweist. Für die Betriebs- und Wartungseinheit existiert eine Mensch/Maschine Schnittstelle (man/machine interface MMI), welche eine verdrahtete Verbindung zu einem Terminal ermöglicht, über welches ein Ingenieur mit der Betriebs- und Wartungseinheit kommunizieren kann. Es sind nun zwei Möglichkeiten denkbar. Ist die Entfernung zwischen der erhöht angeordneten Basisstation und dem Erdboden größer als die maximale Kabellänge, so muß die Wartung nahe der Basisstation durchgeführt werden. Mit anderen Worten das Wartungspersonal muß unter Umständen eine Leiter oder dergleichen verwenden, um die Wartung durchführen zu können., Im Fall der Verwendung einer Leiter bedingt dies aus unfallschutzrechtlichen Gründen den Einsatz einer zweiten Person zur Sicherung der Leiter.

Ist der Abstand zwischen der Basisstation und dem Erdboden kleiner als die maximale Kabellänge, so kann die Wartung zwar vom Erdboden ausgeführt werden, allerdings muß immer noch das Kabel in die Basisstation eingesteckt werden, wodurch letzten Endes wiederum eine Leiter benötigt wird.

Der Erfindung liegt daher die Aufgabe zugrunde, eine Vorrichtung Basisstation-Wartungsterminal, ein Wartungsterminal, sowie ein Verfahren zum Betrieb der Vorrichtung zu schaffen, die eine einfache Verbindung zwischen der Basisstation und dem Wartungsterminal ermöglicht.

Die Aufgabe wird gemäß der Erfindung durch die Merkmale der Ansprüche 1, 3, und 7 gelöst. Bevorzugte Ausführungsformen sind Gegenstand der Unteransprüche.

In einer erfindungsgemäßen Vorrichtung zur Wartung einer Basisstation eines mobilen Telekommunikationsnetzes bestehend aus einem lokalen Wartungsterminal und einer Basisstation kommuniziert die Basisstation mit dem Wartungsterminal über eine drahtlose Verbindung. Eine derartige drahtlose Verbindung kann über Infrarotlicht, Funk oder Ultraschall hergestellt werden.

Ein erfindungsgemäßes lokales Wartungsterminal zur Wartung einer Basisstation eines mobilen Kommunikationsnetzes weist einen Transceiver zum Senden und Empfangen drahtloser Kommunikationssignale auf. Die drahtlosen Kommunikationssignale können dabei über Infrarotlicht, Funk oder Ultraschall übertragen werden. Als Wartungsterminal bzw. lokales Wartungsterminal kann ein PC, insbesondere ein transportabler PC wie ein Notebook verwendet werden. Vorzugsweise ist der Transceiver auf einer PCMCIA-Karte integriert. Der Transceiver kann auch ein separates Gerät sein, das mit dem Wartungsterminal verbunden ist.

Das erfindungsgemäße Verfahren zur drahtlosen Kommunikation eines lokalen Wartungsterminals mit einer Basisstation eines mobilen Telekommunikationsnetzes umfaßt die folgenden Schritte:
a) Starten einer Verbindung zwischen dem Wartungsterminal und der Basisstation durch eine Startanfrage des Wartungsterminals,
b) Authentisierung der Startanfrage durch die Basisstation,
c) Senden einer Authentisierungsquittung durch das Wartungsterminal,
d) Datenverkehr zwischen Basisstation und Wartungsterminal,
e) Beenden der Verbindung durch Senden eines Endesignals durch das Wartungsterminal oder durch den Ablauf einer vorgegebenen inaktiven Zeitdauer, in der weder das Wartungsterminal noch die Basisstation aktiv waren.

Vorzugsweise enthält die Startanfrage (Schritt a) die Identifikation, d.h. die Identifikationsnummer, der angewählten Basisstation, so daß nur diese Basisstation angesprochen wird. Ferner kann die Authentisierung (Schritt b) eine Zufallszahl enthalten. Die Authentisierungsquittung des Wartungsterminals im Schritt c kann ein Bestätigungsmuster enthalten, das aus der Zufallszahl und einem Passwort unter Verwendung eines Generatorpolynoms erzeugt wird. Ferner wird eine verschlüsselte Datenübertragung im Schritt d bevorzugt. Für die Verschlüsselung können die Zufallszahl, das Passwort und das Generatorpolynom verwendet werden.

Die besonderen Vorzüge der Erfindung sind darin zu sehen, daß die Wartungsperson auf dem Erdboden verbleiben kann und keine Notwendigkeit besteht den Mast zu besteigen, auf dem die Basisstation befestigt ist. Weiterhin wird zur Wartung nur eine Person benötigt, was eine deutliche Kostenreduzierung bewirkt. Die örtliche Konfigurationszeit der Basisstation ist deutlich kürzer, das Servicepersonal braucht keine Verbindungskabel mit sich zu führen, und es muß keine RS232-Schnittstelle an der Basisstation bereitgestellt werden.

Eine bevorzugte Ausführungsform der Erfindung ist nachfolgend anhand der Zeichnung erläutert.

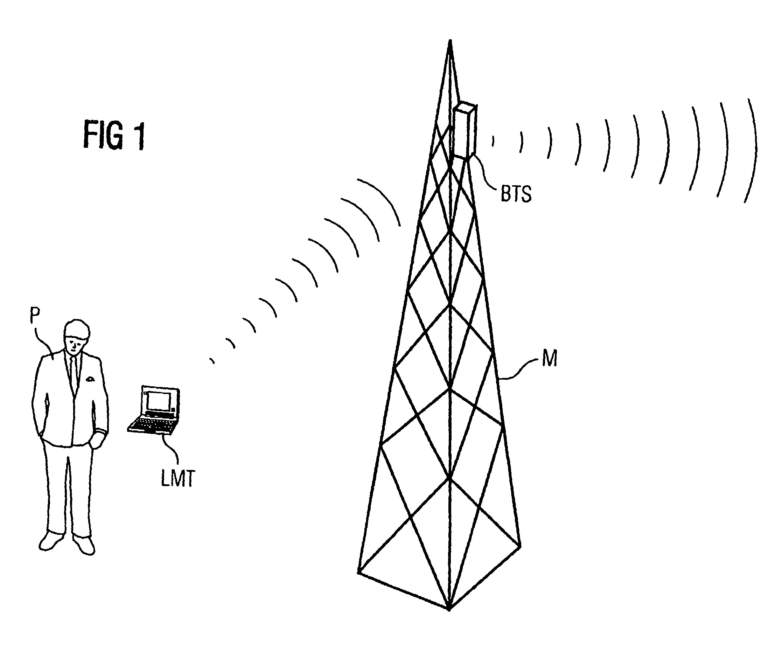

Fig. 1 zeigt eine schematische Darstellung einer Anordnung eines lokalen Wartungsterminals und einer Basisstation.

In der Fig. 1 ist die wesentliche Idee der Erfindung dargestellt. An einem Mast M ist in entsprechender Höhe eine Basisstation BTS angebracht, die aufgrund der Höhe von dem Service nur schwer erreichbar ist. Mittels einer drahtlosen Verbindung, hier schematisch mit den angedeuteten Funkwellen dargestellt, wird eine Verbindung zwischen dem lokalen Wartungsterminal LMT und der Basisstation BTS hergestellt. Das lokale Wartungsterminal LMT wird von einer Serviceperson P bedient. Der Zugriff des lokalen Wartungterminals LMT auf die Basisstation BTS erfolgt daher völlig problemlos.

Die Verbindung zwischen dem lokalen Wartungsterminal LMT und der Basisstation BTS wird nach dem im vorangegangenen dargestellten Verfahren durchgeführt.

## Patentansprüche

1. Vorrichtung zur Wartung einer Basisstation (BTS) eines mobilen Telekommunikationsnetzes bestehend aus einem lokalen Wartungsterminal (LMT) und einer Basisstation (BTS)
**dadurch gekennzeichnet,**
**daß** die Basisstation (BTS) Mittel aufweist zur Kommunikation mit dem lokalen Wartungsterminal (LMT) über eine drahtlose verbindung.

2. Vorrichtung nach Anspruch 1, **dadurch gekennzeichnet, daß** die drahtlose Verbindung über Infrarotlicht, Funk oder Ultraschall hergestellt wird.

3. Wartungsterminal (LMT) zur Wartung einer Basisstation (BTS) eines mobilen Kommunikationsnetzes, **dadurch gekennzeichnet, daß** das Wartungsterminal (LMT) einen Transceiver zum Senden und Empfangen drahtloser Kommunikationssignale zu bzw. von der Basisstation aufweist.

4. Wartungsterminal (LMT) nach Anspruch 3, **dadurch gekennzeichnet, daß** der Transceiver auf einer PCMCIA-Karte integriert ist.

5. Wartungsterminal (LMT) nach Anspruch 3, **dadurch gekennzeichnet, daß** der Transceiver ein separates Gerät ist, das mit dem Wartungsterminal (LMT) verbunden ist.

6. Wartungsterminal (LMT) nach einem der Ansprüche 3 bis 5, **dadurch gekennzeichnet, daß** das Wartungsterminal (LMT) ein Notebook ist.

7. Verfahren zur drahtlosen Kommunikation eines Wartungsterminals (LMT) mit einer Basisstation (BTS) eines mobilen Telekommunikationsnetzes, **dadurch gekennzeichnet, daß** das Verfahren die folgenden Schritte umfaßt:
a) Starten einer Verbindung zwischen dem Wartungsterminal (LMT) und der Basisstation (BTS) durch eine Startanfrage des Wartungsterminals,
b) Authentisierung der Startanfrage durch die Basisstation (BTS),
c) Senden einer Authentisierungsquittung durch das Wartungsterminal (LMT),
d) Datenverkehr zwischen Basisstation (BTS) und Wartungsterminal (LMT),
e) Beenden der Verbindung durch Senden eines Endesignals durch das Wartungsterminal (LMT) oder durch den Ablauf eines vorgegebenen Zeitintervalls, in dem sowohl Basisstation (BTS) als auch Wartungsterminal (LMT) inaktiv sind.

8. Verfahren nach Anspruch 7, **dadurch gekennzeichnet, daß** die Startanfrage die Identifikation der angewählten Basisstation (BTS) enthält.

9. Verfahren nach einem der Ansprüche 7 oder 8, **dadurch gekennzeichnet, daß** die Authentisierung eine Zufallszahl enthält.

10. Verfahren nach Anspruch 9, **dadurch gekennzeichnet, daß** die Authentisierungsquittung des Wartungsterminals (LMT) ein Bestätigungsmuster enthält, das aus der Zufallszahl und einem Passwort unter Verwendung eines Generatorpolynoms erzeugt wird.

11. Verfahren nach Anspruch 10, **dadurch gekennzeichnet, daß** die Datenübertragung verschlüsselt erfolgt.

12. Verfahren nach Anspruch 11, **dadurch gekennzeichnet, daß** die Verschlüsselung die Zufallszahl, das Passwort und das Generatorpolynom verwendet.

## Claims

1. Device for the maintenance of a base station (BTS) of a mobile telecommunication network, consisting of a local maintenance terminal (LMT) and a base station (BTS),
**characterized in that**
the base station (BTS) has a means of communication with the local maintenance terminal (LMT) by means of a wireless connection.

2. Device in accordance with claim 1, **characterized in that** the wireless connection is established by means of infrared light, radio or ultrasound.

3. Maintenance terminal (LMT) for maintenance of a base station (BTS) of a mobile communication network, **characterized in that** the maintenance terminal (LMT) has a transceiver for transmitting and receiving wireless communication signals to or from the base station.

4. Maintenance terminal (LMT) in accordance with claim 3, **characterized in that** the transceiver is integrated into a PCMCIA card.

5. Maintenance terminal (LMT) in accordance with claim 3, **characterized in that** the transceiver is a separate unit that is connected to the maintenance terminal (LMT).

6. Maintenance terminal (LMT) in accordance with one of claims 3 to 5, **characterized in that** the maintenance terminal (LMT) is a notebook.

7. Method of wireless communication of a maintenance terminal (LMT) with a base station (BTS) of a mobile telecommunication network, **characterized in that** the method contains the following steps:
a) Starting a connection between the maintenance terminal (LMT) and the base station (BTS) by means of a start request by the maintenance terminal.
b) Authentication of the start request by the base station (BTS).
c) Transmission of an authentication acknowledgment by the maintenance terminal (LMT).
d) Data traffic between the base station (BTS) and maintenance terminal (LMT).
e) Ending the connection by sending an end signal from the maintenance terminal (LMT) or due to the expiry of a predetermined period, in which neither the maintenance terminal (LMT) nor the base station (BTS) were active.

8. Method in accordance with claim 7, **characterized in that** the start request contains the identification of the selected base station (BTS).

9. Method in accordance with one of claims 7 or 8, **characterized in that** the authentication contains a random number.

10. Method in accordance with claim 9, **characterized in that** the authentication acknowledgment of the maintenance terminal (LMT) contains a confirmation pattern generated from the random number and a password by using a generator polynomial.

11. Method in accordance with claim 10, **characterized in that** the data is transmitted encrypted.

12. Method in accordance with claim 11, **characterized in that** the encryption uses the random number, the password and the generator polynomial.

## Revendications

1. Dispositif de maintenance d'une station de base (BTS) d'un réseau mobile de télécommunications composé d'un terminal local de maintenance (LMT) et d'une station de base (BTS), **caractérisé en ce que** la station de base (BTS) comporte des moyens permettant la communication avec le terminal local de maintenance (LMT) par l'intermédiaire d'une connexion sans fil.

2. Dispositif selon la revendication 1, **caractérisé en ce que** la connexion sans fil est établie par lumière infrarouge, radio ou ultrason.

3. Terminal de maintenance (LMT) pour la maintenance d'une station de base (BTS) d'un réseau mobile de télécommunications, **caractérisé en ce que** le terminal de maintenance (LMT) comprend un transceiver pour émission et réception de signaux de communication sans fil à destination resp. en provenance de la station de base.

4. Terminal de maintenance (LMT) selon la revendication 3, **caractérisé en ce que** le transceiver est intégré sur une carte PCMCIA.

5. Terminal de maintenance (LMT) selon la revendication 3, **caractérisé en ce que** le transceiver est un appareil séparé relié au terminal de maintenance (LMT).

6. Terminal de maintenance (LMT) selon l'une des revendications 3 à 5, **caractérisé en ce que** le terminal de maintenance (LMT) est un notebook.

7. Procédé de communication sans fil d'un terminal de maintenance (LMT) avec une station de base (BTS) d'un réseau mobile de télécommunications, **caractérisé en ce que** le procédé comprend les étapes suivantes :
a) lancement d'une connexion entre le terminal de maintenance (LMT) et la station de base (BTS) par une demande de lancement du terminal de maintenance,
b) authentification de la demande de lancement par la station de base (BTS),
c) envoi d'un accusé de réception d'authentification par le terminal de maintenance (LMT),
d) trafic de données entre station de base (BTS) et terminal de maintenance (LMT),
e) clôture de la connexion par envoi d'un signal de fin par le terminal de maintenance (LMT) ou par l'expiration d'un intervalle de temps prédéterminé dans lequel et la station de base (BTS) et le terminal de maintenance (LMT) sont inactifs.

8. Procédé selon la revendication 7, **caractérisé en ce que** la demande de lancement comporte l'identification de la station de base (BTS) sélectionnée.

9. Procédé selon l'une des revendications 7 ou 8, **caractérisé en ce que** l'authentification comporte un nombre aléatoire.

10. Procédé selon la revendication 9, **caractérisé en ce que** l'accusé de réception d'authentification du terminal de maintenance (LMT) comporte un modèle de confirmation généré à partir du nombre aléatoire et d'un mot de passe en utilisant un polynôme générateur.

11. Procédé selon la revendication 10, **caractérisé en ce que** la transmission de données se fait de manière cryptée.

12. Procédé selon la revendication 11, **caractérisé en ce que** le cryptage utilise le nombre aléatoire, le mot de passe et le polynôme générateur.
